# EUROPEAN PATENT APPLICATION

(11) **EP 1 089 588 A1**
(43) Date of publication of application: **04.04.2001**
(21) Application number: 99118290.8
(22) Date of filing: 15.09.1999
(51) Int. Cl.: H04Q 7/38

(54) **Method, device and program unit for improving the transmission quality in a CDMA system**

(71) Applicant: TELEFONAKTIEBOLAGET LM ERICSSON (publ), 126 25 Stockholm (SE)
(72) Inventor: Müller, Walter, 19462 Upplands Väsbys (SE); Petersson, Justus, 90403 Nürnberg (DE)
(74) Representative: Mohsler, Gabriele

(57) **Abstract**

A method for the improvement of the transmission quality in a code division multiple access (CDMA) system is described for a system comprising radio means (20) for a wireless connection to user equipment, means for performing a handover of a connection between different radio means (20) and means for the measurement of limited quantities available to the radio means (20) for connections to user equipment. In the method, a first measurement of at least one limited quantity is performed for a first of said radio means (20), a first comparison (2) of the measured value to a first threshold value is performed, a further measurement of at least one limited quantity is performed for a second of said radio means (20), and comparisons of the further measured values to respective second threshold values for the second radio means (20) are performed. A handover of the user equipment is performed which sets up a connection between the user equipment and the second radio means (20) if the result of the first comparison (2) indicates a high loading of the limited quantity and the results of the further comparisons allow the connection. In addition, a network implementing the method, a device and a software program unit are described.

## Description

### Technical field of the invention

The present invention relates to a method according to the preamble of claim 1. In addition, a network implementing the method, a device and a software program unit are described.

### Background

In a code division multiple access system (CDMA system), several connections share a common radio band. Signals of different connections are modulated with corresponding codes and are, in this way, separable in a receiver. Radio means in the system perform the wireless connection to user equipment (UE), e.g. mobile phones, located in the cell area served by a base station. Generally, the radio means comprise an antenna fed by the radio base station (RBS). By using directional antennas, a single base station can be part of several radio means and serve a cell consisting of several sectors. The code for the modulation of the signals usually comprises a scrambling code denoting the cell and the sector, i.e. the radio means, and a channelisation code. For a good separation of the connections, the latter are orthogonal for all connections within a single sector while scrambling codes are preferably almost orthogonal to each other.

A specific user equipment can be connected simultaneously to two or more radio means if it is tuned to suitable signal codes (3^{rd} Generation Partnership Project (3GPP), Technical Specification RAN 25.214 V 1.1.1). Therefore, it is possible to perform a so-called soft handover of user equipment between radio means. In a soft handover, the connection of the user equipment to a first radio means is only released after the connection to second radio means is established, i.e. the user equipment is connected for a period of time to both radio means simultaneously. The system is provided with control means for performing the soft handover of a connection, which is the usual type of handover for speech connections in CDMA systems.

The term "soft handover" is sometimes used only for a handover between cells served by different base stations while a handover between the cell sectors of a single base station is called a "softer handover". Throughout the present text, the term "soft handover" comprises both possibilities, i.e. also a handover between the sectors of a single base station, while a "softer handover" always denotes a handover between radio means of a single base station.

The quality of transmission in a CDMA system is determined predominantly by the transmission delay and the bit error rate on the radio connection between the user equipment and the radio means. The bit error rate increases with decreasing signal to interference ratio in the receivers of the user equipment and of the radio means. Therefore, the lower limit of the bit error rate is influenced by the maximum output power of the transmitters in the system. The error rate is also affected by the level of interference in the radio band which is a function of the number and distribution of user equipment in and around a cell area. Consequently, the level of interference and the output power are quantities which limit the quality of transmission.

To ensure a predefined quality of service for established connections, the system is provided with means for the measurement of limited quantities available to the radio means for connecting to user equipment. For example, the received signal to interference ratio is measured both in the radio means and the user equipment (3^{rd} Generation Partnership Project (3GPP), Technical Specification TS 25.231 V 0.3.1). According to the results, control bits are sent to the respective transmitter to adjust the signal power. The measurements are also used to perform an admission and congestion control in the system. The admission control checks and adjusts the allocation of limited quantities upon defined events in the system. If, for instance, the level of interference is higher than a predetermined value, the connection of additional user equipment to radio means, e.g. through call set-up or handover, as well as upgrading the data rate of connections is denied by the admission control upon the corresponding request. The congestion control continuously monitors limited quantities to avoid congestion of the system during ongoing connections, e.g. due to changes in the distribution of user equipment in or around a cell area. In case of congestion, connections can be dropped or their data rate be reduced by the congestion control.

A further limit for the capacity of a CDMA system is the number of orthogonal channelisation codes which can be used by the radio means and user equipment. A connection between user equipment and radio means must be denied by the admission control if channelisation codes are not available. Therefore, also the number of channelisation codes is a limited quantity of the radio means for the connection to user equipment.

### Summary of the invention

It is an object of the present invention to obviate these disadvantages and improve the quality of service in a CDMA system. It is a further object, to allow an increased number of connections between user equipment and radio means in a CDMA system. It is still another object to reduce the signal power necessary to obtain a defined quality of transmission.

According to the invention, the method described in claim 1 is performed. Furthermore, the invention is embodied in a network as described in claim 12, a device as described in claim 13 and a program unit according to claim 19.

In the proposed method, a first measurement of a limited quantity is performed for a first radio means which is generally connected to user equipment. The measured value is compared to a first threshold value for the respective limited quantity. The threshold value can be different for different radio means, e.g. for an RBS in a rural or metropolitan area, and it may vary according to other parameters like time of the day or operating parameters of the radio means. It is preferable to perform measurements and comparisons with a threshold for several limited quantities of the first radio means simultaneously.

At least one other measurement of a limited quantity is performed for second radio means which can be connected to user equipment served by the first radio means in the present position of said user equipment. Often a connection of a specific user equipment is possible to several radio means which can each perform corresponding measurements regularly or upon request. A list of suitable radio means can be stored and updated by a control device in the CDMA system or be identified by the user equipment in an evaluation of the signals in the radio band. Regularly or upon notification from the control device or user equipment, the measurement results are transmitted to the devices performing the second comparisons. The measured values are compared to respective second threshold values for each second radio means.

The second threshold values may differ for different radio means. For given radio means, the first and second threshold values can be different. The second threshold is preferably lower than the first one to avoid system instabilities due to repeated handover between a pair of radio means. The first and second measurements and comparisons need not be performed in this order. They can be repeated at regular intervals or upon defined events, e.g. the set-up of a connection, and stored in a control device of the CDMA system, e.g. in a radio network controller (RNC), until they are requested for a comparison.

If the result of the first comparison indicates a high loading of a limited quantity, especially if the first measured value is equal to or larger than the system limit, a handover of the user equipment to reduce the loading of the limited quantity can be suitable. The handover sets up a connection between the user equipment and second radio means. It is, however, only executed if the results of the second comparisons allow the connection, i.e. there must at least be sufficient resources of the second radio means to establish a connection. Unless congestion can be excluded for a specific quantity, all quantities which can be limiting to a handover should be evaluated for the second radio means. A handover to reduce the loading of a first limited quantity in one cell will often be impossible due to an increase of another limited quantity in a second cell. For example, a handover to reduce the number of codes in a first cell or sector will generally increase the level of interference in an adjacent one. Similarly, an additional connection in the up-link to reduce the necessary output power in a softer handover will generally increase the interference level in the down-link as customary CDMA systems establish a down-link connection in all sectors were an up-link connection is requested.

The above method is preferably used in connection with the admission and congestion control in the CDMA system. It is applicable both in a CDMA system with frequency division duplex (FDD) and time division duplex (TDD). The proposed method improves the quality of transmission in a CDMA system because the loading of limited quantities of individual radio means is reduced. For this reason, the capacity of the system is increased.

The limited quantities preferably comprise the interference level of the connection, the output power of the radio means, the output power of the user equipment or resources of the radio means like the number of orthogonal channelisation codes available to the radio means. Of especial importance for the quality of transmission and the control of the system is the level of the up-link interference. In some cases, different physical quantities which can be measured correspond to the same limited quantity. Therefore, the measured quantity corresponding to the same limited quantity can be different for the up-link and down-link connection. For example, the measured quantity corresponding to the interference level can be the total received power of the radio means in the up-link and the transmission power of the radio means in the down-link connection.

In a preferred embodiment of the method, the handover is a soft handover wherein the user equipment is simultaneously connected to different radio means. The method is applicable repeatedly for the same user equipment and can therefore also be used if given equipment is already connected to more than one radio means. In a soft handover, the user equipment can reduce the output power with a gain of up to 3dB because different radio means can combine the signals of the user equipment. Therefore, also the battery consumption of the user equipment is reduced. Preferably, a reduction in the output power of user equipment is attained in a softer handover between the radio means of a single base station. A combination of signals from different base stations requires high technical efforts and increases the delay in a connection. Although user equipment has only a single connection to each radio means in most cases, more than one connection to a specific radio means is sometimes preferable, e.g. if several applications on the user equipment require a connection.

In a further preferred embodiment, the method avoids imbalances in the system like differences in the number of user equipment connected to different radio means or differences in the interference levels. For this purpose, a handover is performed if the loading of limited quantities for other radio means suitable to connect to the user equipment is lower, preferably considerably lower, than the loading of the limited quantities for the first radio means. In this way, a high loading of limited quantities is diminished and the system control simplified. Variations in the size of a sector due to changing levels of interference are reduced. The quality of service is improved and homogenous in the area of adjacent cells, especially when high interference levels are avoided in uplink connections.

Preferably, measurements of limited quantities are performed in a radio base station (RBS) and a radio network controller (RNC). Especially if all radio means affected by the method belong to the same base station, the RBS is suitable to execute comparisons and initiate the handover. In this way, the transfer of data between different nodes in the system can be reduced. A preferable network device to perform the comparisons and initiate the handover is a system node which controls base stations, e.g. an RNC. In this case, measurement results from the base stations are transmitted to the RNC. It is alternatively possible to transmit the results of the comparisons to the threshold values to the device which evaluates if a handover is to be initiated. An RNC or another system node which connects base stations has to be part of the method if a handover is performed between different base stations.

Measurements can also be performed in user equipment and their results be transmitted to a base station (RBS) or a radio network controller (RNC) for evaluation of the result. This is for example suitable to evaluate the path loss of signals sent by the radio means, i.e. the signal power received by the user equipment.

Preferably, measurements and evaluations are performed in regular time intervals to avoid a congestion of the system. Alternatively or in addition, measurements and evaluations are performed upon specific events in the system, especially events in which the allocation of first or additional resources to a connection is requested like the setup of a new connection or the request for an upgrade of the data rate allowed in a connection.

Whether the connection of user equipment to the first radio means is released after the handover depends on the limited quantities due to which it takes place. If a handover is performed because of a limited number of channelisation codes, the first connection has to be canceled to release the respective code of the first radio means. If a handover, especially a softer handover, is performed to reduce the required output power of radio means or user equipment, preferably all connections are maintained to combine the received signals. In case that all connections are maintained, regular checks are advantageous whether the release of one of the connections improves the overall loading of limited quantities.

A connection during set-up does not contribute to the measured value of some limited quantities allocated to it but it limits the residual limited quantities which can be attributed to other connections. The contribution of connections with variable data rate, e.g. discontinuous data traffic, to the measurements is often below the peak value. To avoid a reduction of connection quality when these limited quantities are used or the peak value is attained, it is proposed to correct measured values by limited quantities which are allocated to established connections but not used during the measurements.

Sometimes, a handover according to the proposed method is impossible or disadvantageous because the limited quantities of adjacent cells are also highly loaded. In this case, limited quantities allocated to a connection are preferably reduced to avoid a congestion of the system if a first comparison indicates a high loading of a limited quantity. The reduction can depend on the kind of service or a classification of the connection which indicates if the corresponding application can be cancelled or works with a reduced data rate.

The above methods are preferably performed in a communication network. They are especially suitable for a radio access network of the universal mobile telecommunication system (UMTS).

The proposed invention is suitably embodied in a control device in the CDMA system as described in claim 13, e.g. in an RBS, an RNC or another network node. The device performs at least a part of the method as described above. It is often advantageous, that steps of the method, especially all or some measurements, are performed in a different device and the results are transmitted to those devices performing other steps. Also one or more comparisons can be performed in a device of the CDMA network which is remote from the device which evaluates the results of the comparisons and initiates the handover procedure. In these cases, results, commands and acknowledgements are transmitted to and from the devices performing the measurements, comparisons and the decision for the handover.

It is preferable that the invention is embodied as software program unit which is loadable into the memory of a control device, e.g. a network node in a CDMA system. The program unit is generally part of the program for the control of the device and can be stored on a data carrier, e.g. a magnetic or optical recording medium. The unit performs at least a part of the method as described above. It reads the results of the measurements either directly and performs the comparisons of the measured values to the threshold values. Alternatively, the results read by the unit are the results of the comparisons of the measured values to the respective threshold values. The handover is generally caused by a command which is transmitted to other program units or devices.

The foregoing and other objects, features and advantages of the present invention will become more apparent in the following detailed description of preferred embodiments as illustrated in the accompanying drawings.

### Brief description of the drawings

- Fig. 1: shows the flow chart of a method according to the invention
- Fig. 2: shows a configuration for the measurement of the uplink interference in a system according to the invention
- Fig. 3: shows a sketch of a cell structure in a CDMA radio system

### Detailed description of the invention

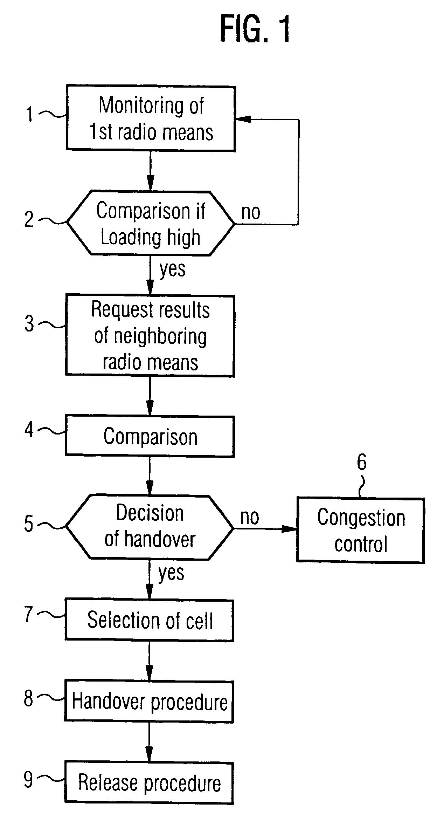

The flow chart in fig. 1 shows a preferred embodiment of the invention. In a monitoring step 1 of the method, one or several limited quantities determining the quality of transmission are measured for first radio means serving a specific cell or cell sector. Examples of said limited quantities comprise the interference level of the connections, the output power of the user equipment in the cell or the output power of the radio means. For some limited quantities like the number of available channelisation codes, the measurement can be a query of present operating parameters of the first radio means. Some measurements, e.g. the query of the number of channelisation codes allocated to connections, can be performed in a network node like an RNC while other measurements are preferably performed in a radio base station or user equipment. The measurements are performed in regular intervals or upon defined events in the system, e.g. after a request for the set-up of a new connection by user equipment.

In following comparison 2, the measured values are compared to threshold values for the specific radio means which indicate if the loading of a limited quantity is high. In addition, it is checked if there is a shortage of resources like channelisation codes for the specific radio means which limits or excludes the set-up of additional connections. The threshold values can be for example the loading for which the quality of transmission begins to decrease or they can be lower, especially if checks for imbalances in the system are performed in the method. As long as no check in comparison 2 indicates that the loading of a limited quantity is high, the comparisons 2 are repeated after corresponding monitoring steps 1 without further action.

If any check in comparison 2 indicates a high loading of a limited quantity, results of the loading of limited quantities for neighboring radio means are requested in request 3. Because monitoring steps 1 and comparisons 2 are generally performed for a number of radio means, preferably for all radio means in a network, the results transmitted upon request 3 can be the measured values of a monitoring step 1 or the result of a comparison 2 for the respective neighboring radio means. If the comparison 4 is not performed in the same device as the measurement or comparison 2, the results are transmitted to the respective device. As an alternative to a request 3, transmissions can be performed regularly.

A further comparison 4 of the loading is performed for the limited quantities in the neighboring cells and sectors. The further comparison 4 indicates whether a handover is allowable. In comparison 4, the results transmitted due to request 3 which correspond to the limited quantities for the radio means in the adjacent cells and sectors are compared to respective threshold values. The threshold values can depend on the specific radio means and can differ from the threshold values in comparison 2 for the same radio means and limited quantity. The comparison 4 can be performed in radio means or in a device interconnecting radio means, e.g. in an RNC.

Preferably, in comparison 4 the results of comparison 2 for the first radio means are also compared with the respective results for radio means serving adjacent cells or cell sectors. If the difference of the loading exceeds a predefined value, there is an imbalance of limited quantities between the radio means. In this case, performance and control of the system can also be improved by a handover of a connection between radio means.

Depending on the results of comparison 4, a decision 5 is performed if a handover is suitable. The device performing decision 5 can be identical to the device used for the comparison 2 and/or comparison 4, e.g. the base station comprising the radio means for which the first comparison is performed or an RNC. Else results are transmitted between the respective devices.

In case that no handover is possible, congestion control 6 checks the limited quantities allocated to user equipment connected to the first radio means. To guarantee a predefined quality of transmission, limited quantities allocated to user equipment connected to the radio means can be adjusted by the congestion control 6. For example, the allocated data rate of connections to user equipment can be reduced or a connection with low priority can be cancelled. After the congestion control 6, the method is continued with a new monitoring step 1.

If a handover is possible, it is decided in selection 7 to which radio means the handover is to be performed. Measurements, e.g. of the signal power received, from user equipment served by the first radio means can indicate to which radio means a handover is possible. Selection 7 is based on the loading of the adjacent cells as checked in comparison 4. It is suitable to perform selection 7 in a node of the CDMA system, e.g. in an RNC, or in a base station. If selection 7 is performed in a base station, the result is transmitted to the RNC controlling the base station for approval or rejection of the handover. The following handover procedure 8 executes the handover which is preferably a soft handover. Finally, a release procedure 9 is performed. In release procedure 9, a decision is taken if and when the connection of the user equipment to the first radio means is released and the release initiated. After the release procedure 9 the method is started again with a new monitoring step 1.

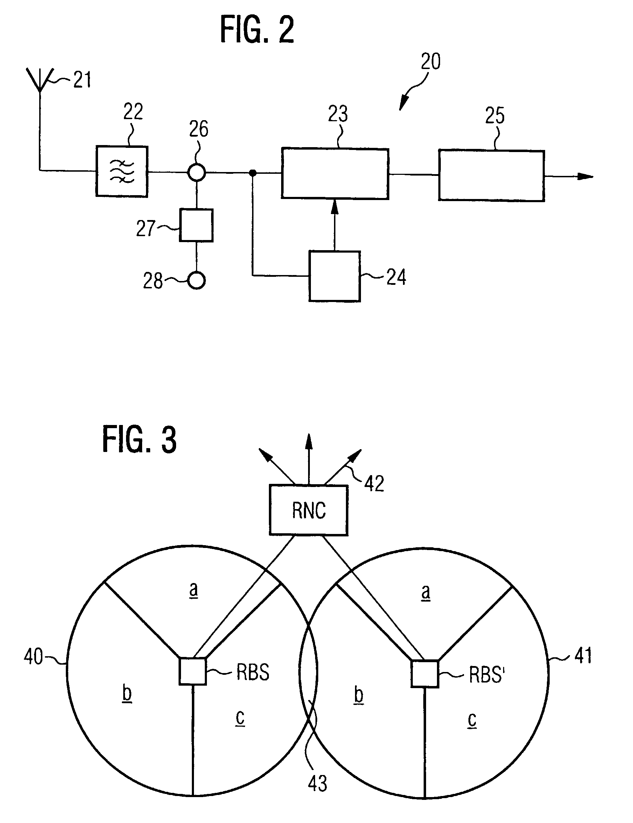

Figure 2 shows a block chart depicting the receiver part of radio means 20. The radio means 20 comprise an antenna 21 for reception of signals sent by user equipment. The input signal is fed to a filter 22 selecting a radio band. A despreader 23 demodulates user data from the scrambling and channelisation codes which causes a reduction from the bandwidth corresponding to the chiprate of the input signal to a bandwidth corresponding to the data rate. The despreader 23 is controlled by a searcher 24 which selects the scrambling and channelisation code of the signals which are to be despread. The data is further processed in a data demodulator 25 which forwards the data to additional processing units (not shown).

An important limited quantity for radio means 20 is the total up-link interference which is defined as the total received power from all user equipment within the area served by the radio means and the surrounding cells. The interference is preferably measured at measurement point 26 by a measurement device 27 because prior to despreading the input signal contains the total power received from the radio band. Preferably, the measured value is the mean of a period of time between 10 and 2000 ms. The output 28 of measurement device 27 is connectable to means which perform a comparison 2, 4 to a threshold value.

In figure 3, a CDMA system is represented schematically. The area covered by the system is subdivided into cells 40, 41 which comprise several sectors a, b, c each. The cells 40, 41 are served by radio means, i.e. radio base stations (RBS, RBS') with directional antennas for the sectors a, b, c. The base stations are interconnected and controlled via a radio network controller (RNC) which also provides links 42 to other nodes forming a network. The network will generally be connected to external networks via suitable edge nodes. User equipment in a sector is interfered not only from equipment in the same sector but also from surrounding sectors and cells. If equipment is located in an overlap region 43 of cells or sectors it can be served from different radio means with similar expense of limited quantities.

The above embodiments admirably achieve the objects of the invention. However, it will be appreciated that departures can be made by those skilled in the art without departing from the scope of the invention which is limited only by the claims.

## Claims

1. Method for the improvement of the transmission quality in a code division multiple access (CDMA) system, wherein the system comprises radio means (20) for a wireless connection to user equipment, means for performing a handover of a connection between different radio means (20) and means for the measurement of limited quantities available to the radio means (20) for connections to user equipment, characterized in that
- a first measurement of at least one limited quantity is performed for a first of said radio means (20),
- a first comparison (2) of the measured value to a first threshold value is performed,
- a further measurement of at least one limited quantity is performed for a second of said radio means (20),
- comparisons (4) of the further measured values to respective second threshold values for the second radio means (20) are performed,
- and a handover of the user equipment is performed which sets up a connection between the user equipment and the second radio means (20) if the result of the first comparison (2) indicates a high loading of the limited quantity and the results of the further comparisons (4) allow the connection.

2. Method according to claim 1, wherein said limited quantities comprise any from a list consisting of the signal to interference level of the connection, the output power of the user equipment, the output power of the radio means (20) and the number of orthogonal channelisation codes available to the radio means (20).

3. Method according to claim 1 or 2, wherein the handover is a soft or a softer handover.

4. Method according to any preceding claim, wherein a handover of the user equipment is performed if the difference between the first and a further comparison of the same limited quantity is larger than a predefined value and the results of the further comparisons (4) allow the handover.

5. Method according to any preceding claim, wherein a comparison and/or the initiation of a handover is performed in a radio base station (RBS) or in a radio network controller (RNC) of the system.

6. Method according to any preceding claim, wherein at least one of said measurements is performed in a user equipment and transmitted to a radio base station (RBS) or a radio network controller (RNC).

7. Method according to any preceding claim, wherein a measurement is performed in regular time intervals.

8. Method according to any preceding claim, wherein a measurement is performed after a request for the allocation of a resource to a connection.

9. Method according to any preceding claim, wherein the connection between user equipment and the first radio means (20) is released after the handover.

10. Method according to any preceding claim, wherein limited quantities which are allocated to a connection but not in use are incorporated into a comparison (2).

11. Method according to any preceding claim, wherein a limited quantity allocated to a connection is adjusted if the result of the first comparison (2) indicates a high loading of the limited quantity and if the results of the further comparisons (4) do not allow a handover.

12. Communication network with code division multiple access, characterized in that a method according to any preceding claim is performed in the network.

13. Control device in a CDMA system that comprises radio means (20) for a wireless connection to user equipment, control means for performing a handover of a connection between different radio means (20) and means for the measurement of limited quantities available to the radio means (20) for connections to user equipment, characterized in that
- the device is provided with or connectable to means for a first comparison (2) of a first measured value of a limited quantity for a first of said radio means (20) to a first threshold value,
- the device is provided with or connectable to means for comparison of further measured values of at least one limited quantity for second of said radio means (20) to respective second threshold values for the second radio means (20),
- the device is provided with means to evaluate if the result of the first comparison (2) indicates a high loading of the limited quantity and the results of the further comparisons (4) allow a connection between the user equipment and the second radio means (20)
- and the evaluation means cause a handover of user equipment by the control means.

14. Device according to claim 13, wherein the device is provided with or connectable to means for the first measurement and/or means for the further measurement.

15. Device according to claim 13 or 14, wherein the evaluation means cause the handover of the user equipment if the difference between the first and further comparisons (4) of the same limited quantity is larger than a predefined value and the results of the further comparisons (4) allow the handover.

16. Device according any of the claims 13 to 15, wherein the device is a radio base station (RBS) or a radio network controller (RNC).

17. Device according to any of the claims 13 to 16, wherein the device comprises means to cause the release of the connection between user equipment and the first radio means (20) after the handover.

18. Device according to any of the claims 13 to 17, wherein the device comprises means to adjust a limited quantity allocated to a connection and the evaluation means cause an adjustment if the result of the first comparison (2) indicates a high loading of the limited quantity and if the results of the further comparisons (4) do not allow a handover.

19. Program unit on a data carrier or loadable into a control device in a CDMA system, wherein the system comprises radio means (20) for a wireless connection to user equipment, means for performing a handover of a connection between different radio means (20) and means for the measurement of limited quantities available to the radio means (20) for connections to user equipment, characterized in that
- the unit is provided with means to read the result of a first measurement of at least one limited quantity for a first of said radio means (20), wherein the unit is either provided with means for a first comparison (2) of the measured value to a first threshold value or the result read is a first comparison (2) of the measured value to a first threshold value,
- the unit is provided with means to read the result of a further measurement of at least one limited quantity for a second of said radio means (20), wherein the unit is either provided with means for comparisons (4) of the further measured values to respective second threshold values for the second radio means (20) or the results read are comparisons (4) of the further measured values to respective second threshold values for the second radio means (20),
- and the unit is provided with means which cause a handover of the user equipment to set up a connection between the user equipment and the second radio means (20) if the result of the first comparison (2) indicates a high loading of the limited quantity and the results of the further comparisons (4) allow the connection.

20. Program unit according to claim 19, wherein the unit performs at least one step of a method according to any of the claims 1 to 11.
